# EUROPEAN PATENT APPLICATION

(11) **EP 3 450 790 A1**
(43) Date of publication of application: **06.03.2019**
(21) Application number: 17188757.3
(22) Date of filing: 31.08.2017
(51) Int. Cl.: F16D 55/227

(54) **A DISC BRAKE**

(71) Applicant: Meritor Heavy Vehicle Braking Systems (UK) Limited, Cwmbran, Gwent NP44 3XU (GB)
(72) Inventor: TAYLOR, Martin, Cwmbran, Gwent NP44 3XU (GB); CLEARY, Sean, Cwmbran, Gwent NP44 3XU (GB); HOWARD, Alex, Cwmbran, Gwent NP44 3XY (GB)
(74) Representative: Foot, Paul Matthew James

(57) **Abstract**

A disc brake (102) for a heavy commercial vehicle, the disc brake comprising a caliper (103) having an actuation mechanism, a housing (106) for at least partially supporting the actuation mechanism and a bridge (105) extending outboard so as to straddle a rotor and support an outboard brake pad (111b), and a carrier (104) arranged to slidably mount the caliper (103), wherein the caliper (103) further comprises a pad retention structure to mount the outboard brake pad (111b), the retention structure comprising a first rod (130a) extending inboard and mounting the outboard brake pad (111b) to the caliper such that the drag load generated by the outboard pad in a braking operation is transmitted to the bridgem(105) via the first rod.

## Description

### TECHNICAL FIELD

The present invention relates to a disc brake. More particularly, but not exclusively, the present invention relates to a disc brake for heavy commercial vehicles and to a brake pad for use in such a disc brake.

### BACKGROUND

In air-actuated disc brakes, for use on heavy vehicles such as trucks and buses, brake pads are provided, which frictionally contact a rotor to slow rotation of the wheels of the vehicle when required.

Conventionally the brake pads inboard and outboard of the rotor are mounted within recesses of a carrier so that the drag load generated under braking is transmitted principally directly to the carrier, and from the carrier to the vehicle axle or steering knuckle.

At the outboard side of the rotor, it is known for the outboard brake pad to be supported by a bridge portion of the caliper instead of the carrier. The bridge portion typically includes a horizontal surface that the outboard brake pad is seated on, which also helps to ensure the brake pad is in the correct vertical location, in the radial direction, for correct function of the brake. The bridge portion also includes vertical abutments to transmit the drag load from the outboard brake pad to the bridge portion, with the drag load then being transmitted to the carrier via guide pins that slidably mount the caliper on the carrier.

These horizontal and vertical abutments typically require precision machined surfaces that add to the cost of manufacture.

The present invention seeks to overcome or at least mitigate the problems of the prior art.

### SUMMARY OF THE INVENTION

According to an aspect of the invention there is provided a disc brake for a heavy commercial vehicle, the disc brake comprising:
a caliper having an actuation mechanism, a housing for at least partially supporting the actuation mechanism and a bridge extending outboard so as to straddle a rotor and support an outboard brake pad; and
a carrier arranged to slidably mount the caliper;
wherein the caliper further comprises a pad retention structure to mount the outboard brake pad; the retention structure comprising a first rod extending inboard and mounting the outboard brake pad to the caliper such that the drag load generated by the outboard pad in a braking operation is transmitted to the bridge via the first rod. Advantageously the use of a rod to take the drag load from an outboard pad obviates the need for the carrier to extend over the rotor and take this load; or for the bridge to have machined abutment surfaces to take the load from the outboard pad.

The bridge and the housing may define an aperture for the fitting and removal of the outboard brake pad in a radial direction and the first rod may extend at least partially over the aperture. Advantageously in the arrangement, once the outboard brake pad is disengaged from the rod this permits simple removal and refitting of the brake pad without removing the caliper from the carrier.

The first rod may extend over the aperture from the inboard side to the outboard side. This provides a simple arrangement for ensuring stability for the rod. The rod may be releasably mounted to the caliper. Advantageously this facilitates removal and replacement of the outboard brake pad.

The rod may be mounted for fitting and/or removal in an axial direction. This is a convenient direction for fitting and/or removal in a typical situation when the disc brake is mounted to a vehicle and a wheel is removed to replace the brake pads.

The releasable mounting may comprise a threaded portion of the rod for threaded connection to the outboard brake pad. Advantageously this provides a secure releasable mount to the pad for effective transmission of the drag load. In particular this arrangement allows the outboard brake pad to be preloaded against the bridge to assist the transmission of drag load and minimise rattling of the brake pad.

The disc brake may comprise an outboard brake pad, wherein the outboard brake pad may have a threaded bore to receive the threaded rod.

The releasable mounting may comprise a threaded portion of the rod and the caliper may be provided with a complementary threaded bore. This arrangement may ensure that the rod is releasably held in a desired location.

The rod may be arranged to support an inboard brake pad in at least a radially outward direction. This may simplify the support of the inboard pad in addition to the outboard pad.

The disc brake may comprise an inboard brake pad, wherein the inboard brake pad may have a bore therethrough arranged to permit movement of the inboard brake pad in a circumferential direction. This arrangement allows the inboard brake pad to transmit its drag load generated during a braking operation to the brake carrier.

The first rod may be arranged for contact with a piston of the actuation mechanism so as to restrict rotation thereof. Advantageously this allows the rod to perform a further function which avoids the need for additional piston anti-rotation features to be provided.

The retention structure may comprise a second rod further arranged to take a portion of the drag load from the outboard brake pad and transmit the drag load to the caliper.

A second rod is an effective way of maintaining the position of the outboard brake pad when the drag load is generated during a braking operation.

There is also provided an outboard brake pad for fitment to a disc brake as described above, wherein the brake pad has a bore therethrough dimensioned so as to transmit a drag load from the brake pad to a rod extending therethrough, in use.

The bore may be threaded to receive a complementary threaded rod, in use.

There is further provided a brake pad arrangement for a disc brake as described above, comprising an outboard brake pad as described above and an inboard brake pad, the inboard brake pad having a bore therein, the bore permitting circumferential movement of the inboard pad with respect to a rod, in use.

### BRIEF DESCRIPTION OF THE DRAWINGS

Embodiments of the present invention are now described with reference to the accompanying drawings, in which:
Figure 1 is an isometric view of an example disc brake;
Figure 2 is a plan view of the disc brake of Figure 1, with a brake rotor in situ;
Figure 3 is an isometric view of the disc brake of Figure 1 from an inboard direction, with the outboard brake pads omitted for clarity;
Figure 4 is an isometric view of the disc brake of Figure 1 from an inboard direction, with the outboard brake pad and a caliper housing of the disc brake omitted for clarity;
Figure 5 is an isometric view showing an actuator arrangement of the disc brake of Figure 1;
Figure 6 is an isometric view of a disc brake of the present invention viewed from an outboard end;
Figure 7 is an isometric view of the disc brake of Figure 6, viewed from an inboard end;
Figure 8 is a plan view of the disc brake of Figure 6;
Figure 9 is an underside view of the disc brake of Figure 6;
Figure 10 is an outboard end view of the disc brake of Figure 6;
Figure 11 is a side view of the disc brake of Figure 6;
Figure 12 is an isometric view of a disc brake according to another embodiment of the present invention;
Figure 13 is an isometric view of the disc brake of Figure 12 with part of the bridge of the caliper omitted for clarity;
Figure 14 is a plan view of another embodiment of a disc brake of the present invention;
Figures 15A and 15B are isometric views of a spreader plate of the disc brake of either Figure 12 or Figure 14; and
Figures 16A and 16B are isometric views of an alternative spreader plate for use in the disc brake of either Figure 12 or Figure 14.

### DETAILED DESCRIPTION

### Actuation

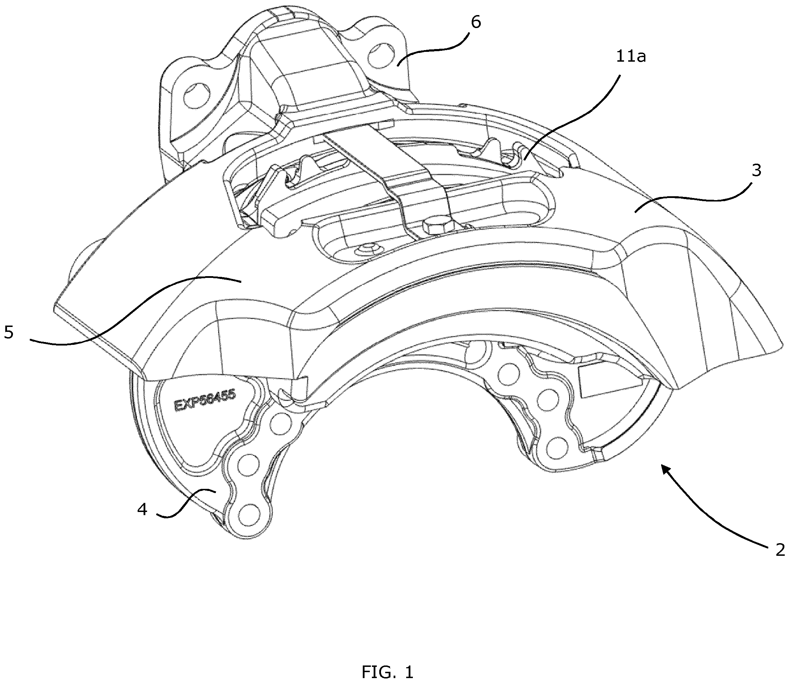

Figures 1 to 5 illustrate an example of a disc brake 2 of a type that may be adapted to incorporate the present invention. The Figures and associated description below are included to explain the function of the actuation mechanism. The disc brake 2 incorporates an actuating mechanism comprising a single piston and is suitable for use on heavy commercial vehicles. This type of disc brake is particularly, but not exclusively, suitable for lighter duty heavy vehicles, for example smaller trucks, or a trailer of a tractor-trailer combination.

Various orientations of the disc brake are described. In particular the directions inboard and outboard refer to the typical orientation of the disc brake when fitted to a vehicle. In this orientation, the brake pad closest to the centre of the vehicle is the brake pad directly actuated by an actuation mechanism, and being the inboard brake pad, and the outboard brake pad being the brake pad mounted to a bridge or frame portion 5 of the caliper. Thus inboard can be equated with an actuating side of the disc brake, and outboard with a reaction side. The terms radial, circumferential, tangential and chordal describe orientations with respect to the brake rotor. The terms vertical and horizontal describe orientations with the disc brake mounted uppermost on an axle, though it will be appreciated that in use such a disc brake may adopt any axle orientation depending upon packaging requirements of the vehicle.

The disc brake 2 comprises a caliper 3 having a housing 6 to accommodate the actuation mechanism, and which is slidably mounted on a carrier 4 for movement in an inboard-outboard direction.

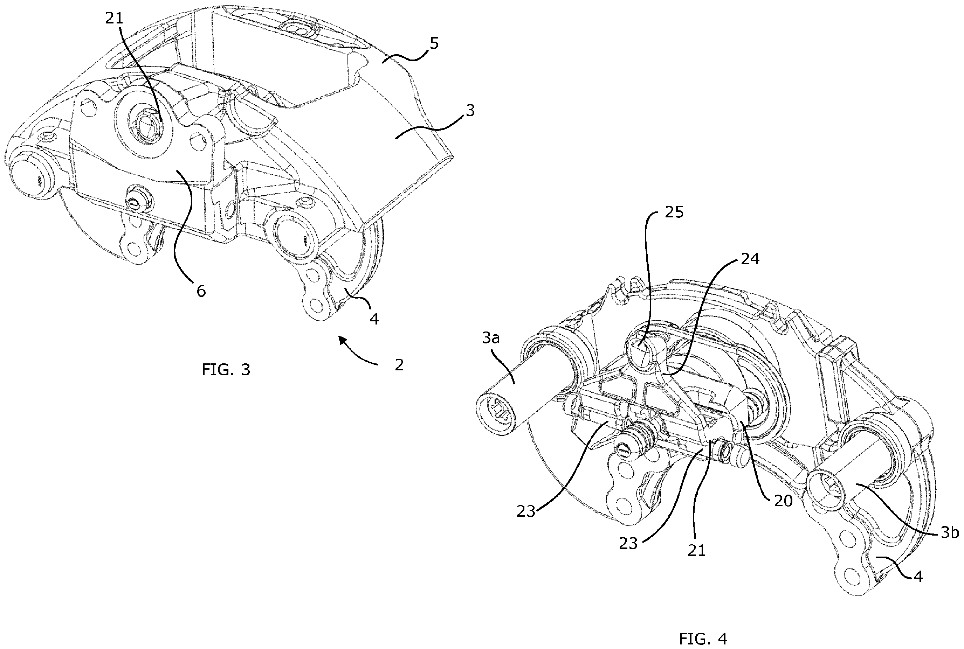

As can be seen best from the view in Figure 4 with the housing 6 omitted, the caliper 3 can slide on the carrier 4, by way of first and second support pins 3a, 3b. In this embodiment, the first support pin 3a is longer than the second support pin 3b.

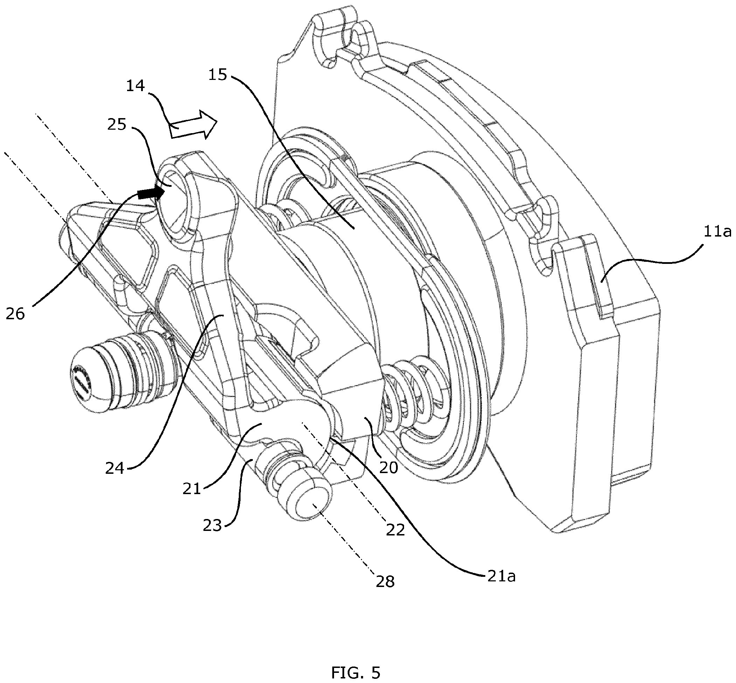

With reference to the cut-away view of Figure 5 in particular, the inboard actuation mechanism comprises a single brake piston 15, slideable in the direction of arrow 14 (i.e. inboard-outboard) relative to the rotor 10 (not shown in Figure 5, for clarity).

In order to urge the piston assembly in the direction of arrow 14, the operating shaft 21 is pivoted about rollers 23 which are located along a transverse axis 28. In this embodiment, there are two rollers 23, which are spaced from one another circumferentially. Each roller 23 is located on a single bearing surface (not shown), each bearing surface being curved to accept the roller 23. Convex surfaces 21a of the operating shaft 21 are located opposite the roller 23. The operating shaft has an axis 22, being the radial centre of the arc defined by surfaces 21a, which is parallel and offset from the axis 28. The curved surface 21a locates in a semi-circular recess of a yoke 20. A surface of the yoke 20 opposite the recess is in contact with an inboard end face of the piston 15. The operating shaft 21 further comprises a lever 24 having a pocket 25 adapted to receive an output push rod (not shown) of a brake actuator (e.g. an air chamber). The lever 24 is, in this embodiment, shaped as an inverted "U" (see Figure 4 in particular) and the line of action of the brake actuator (from pocket 25) is substantially over the line of action of the piston 15.

In other embodiments, another form of cam surface instead of the curved surface 21a of the operating shaft 21 may be employed (e.g. a plain bearing) and/or the arrangement may be reversed with the rollers 23 being in contact with the yoke 20, and the curved surface 21a being located in the recess of the caliper housing 6.

Application of a force in the direction of arrow 26 (Figure 5) causes pivoting movement of the operating shaft 21 about the rollers 23, and the curved surface 21a bears on the yoke 20. The offset axes 28 and 22 cause the yoke 20 to move in the direction of the piston 15, contacting the piston 15 and causing the piston 15 to urge the friction material of an inboard brake pad 11a directly against the rotor 10. A reaction force from the operating shaft 21 is transmitted to the bearing surface of the caliper 3 via the rollers 23 and is then transmitted to an outboard brake pad 11b via the bridge 5, with the friction material of the outboard pad being urged against the rotor 10, such that the brake pads clamp the rotor and effect braking through a frictional brake force.

The actuation mechanism further incorporates a wear adjustment mechanism of a suitable type to maintain an appropriate running clearance between the brake pads 11a, 11b and the rotor 10 as the friction material wears.

### Pad Retention Structure

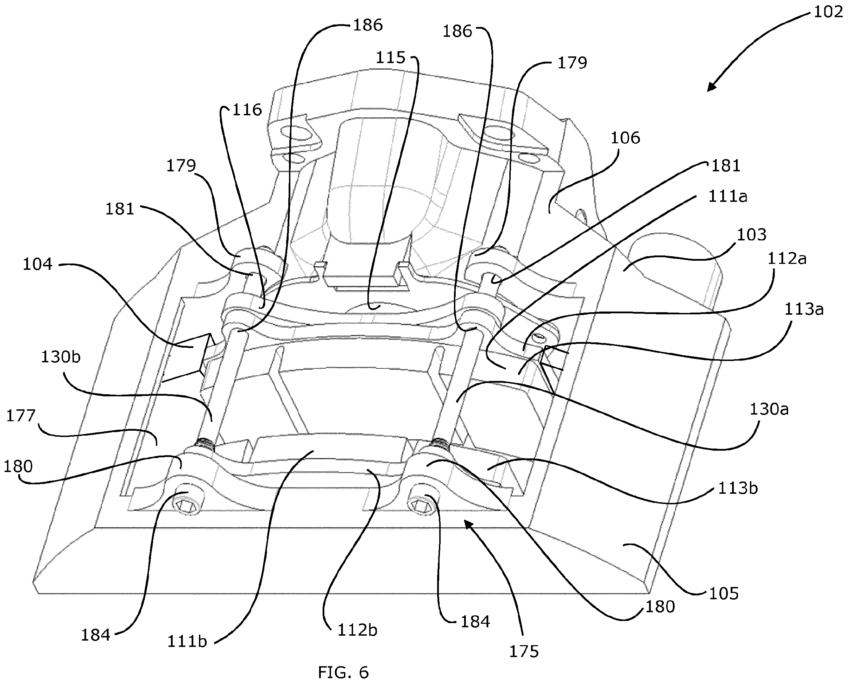

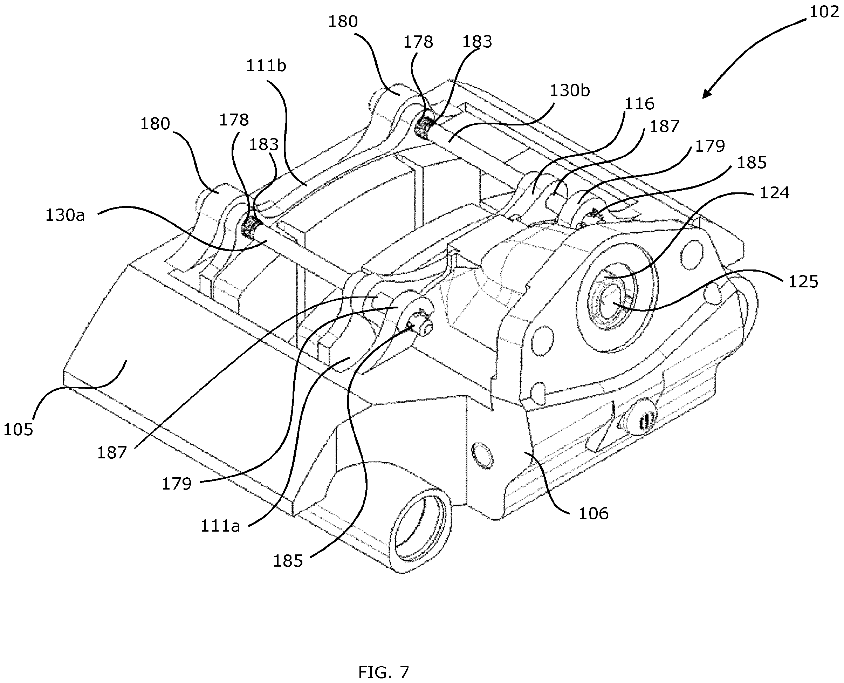

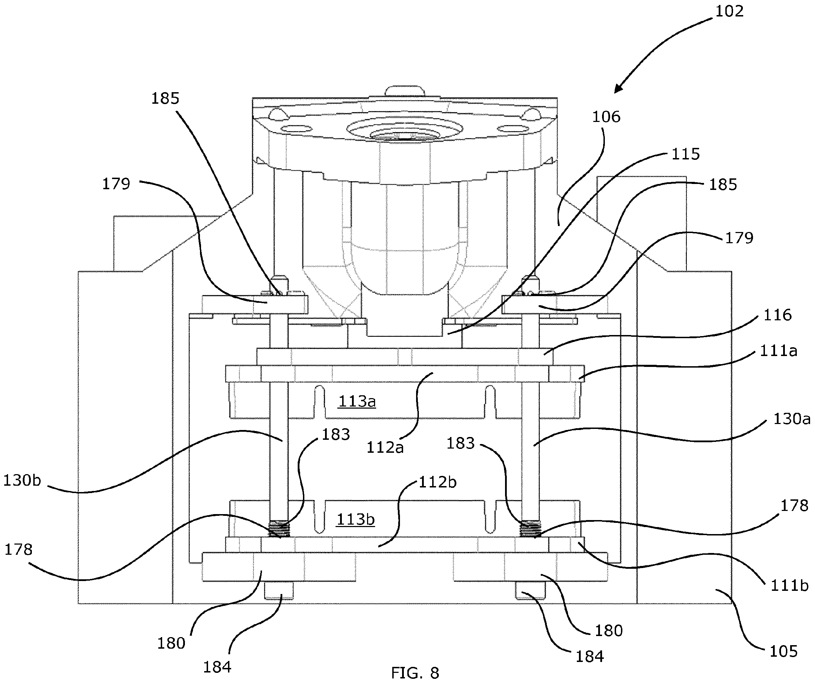

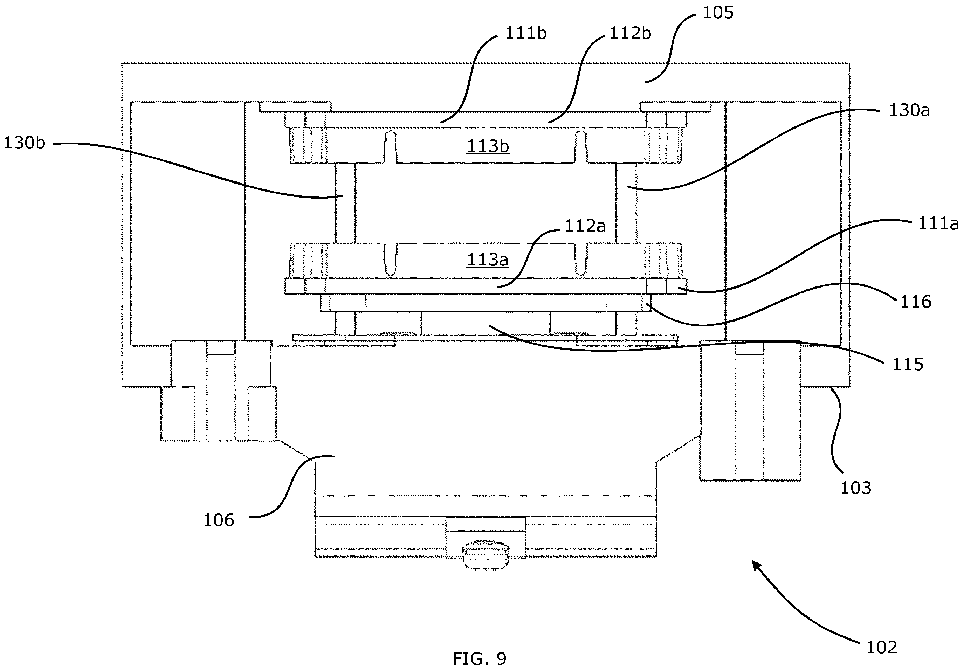

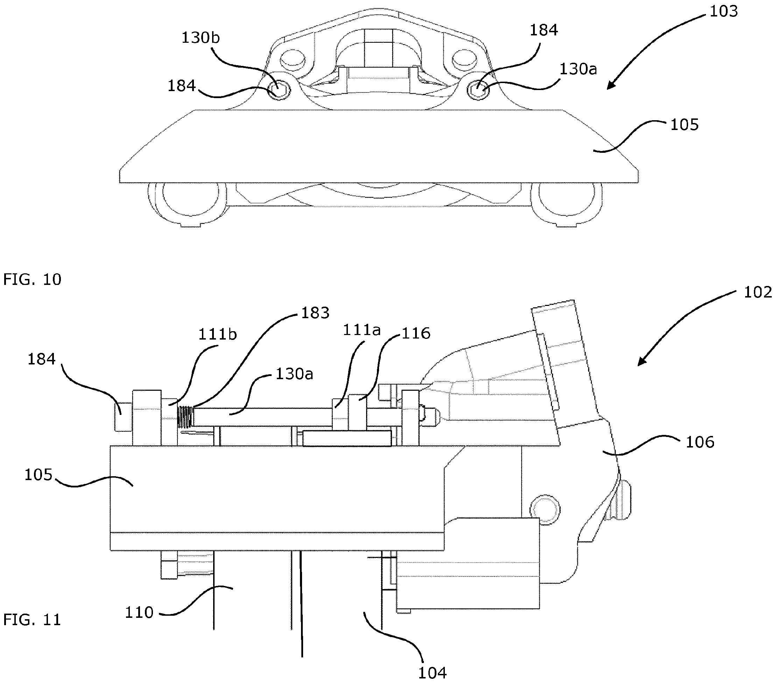

Figures 6 to 11 show a disc brake 102 according to an embodiment of the present invention. Like features in this embodiment are denoted by like numerals to the disc brake 2 of Figures 1-5, but with the addition of the prefix "1". Although largely not visible in Figures 6-11, the actuation mechanism of this embodiment is substantially the same as that of Figures 1 to 5.

The disc brake 102 of this embodiment comprises a caliper 103 which includes a housing 106 which supports and encloses the majority of the actuation mechanism and a bridge 105 extending outboard so as to straddle a rotor 110. The bridge or frame 105 is arranged to support an outboard brake pad 111b such that is can be brought into contact with the brake rotor 110. The disc brake 102 further comprises a carrier 104 which is arranged to slidably mount the caliper 103. The caliper further comprises a pad retention structure 175 to mount the outboard brake pad 111b. The outboard brake pad has sacrificial friction material 113b mounted to a substantially rigid metal supporting backplate 112b.

In this embodiment, the retention structure comprises a first rod 130a and a second rod 130b extending inboard and mounting the outboard brake pad 111b to the caliper 103 such that the drag load generated by the outboard pad in a braking operation is transmitted to the bridge 105 via the first and second rods 130a and 130b. The outboard pad 111b is provided with bores 178 in the backplate 112b in which the first rod and second rod 130a and 130b are received.

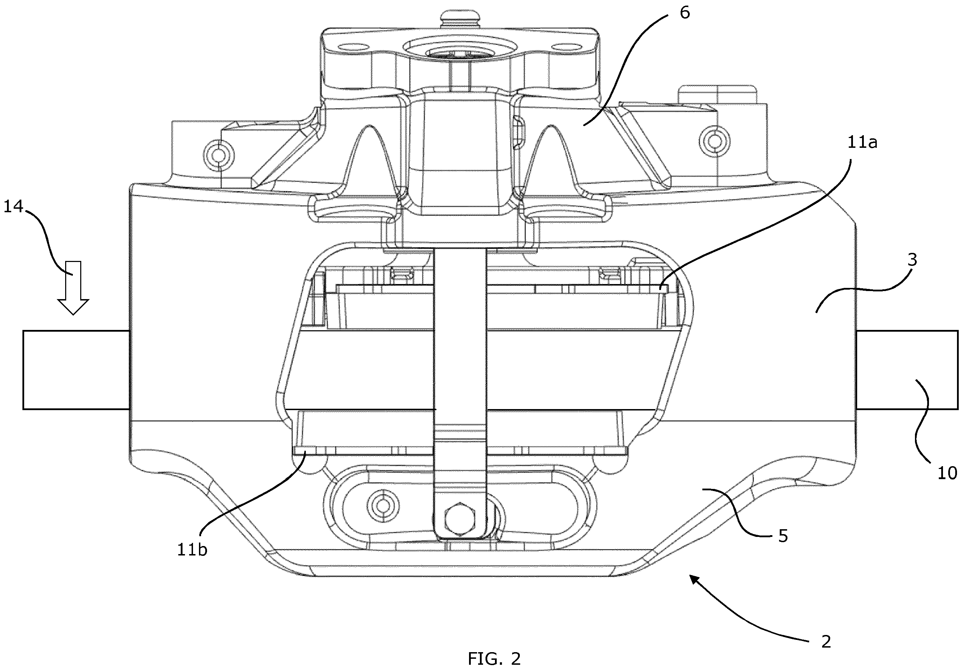

The bridge 105 and the housing 106 define an aperture 177 for the fitting and removal of the outboard brake pad 111b in a radial direction. In this embodiment the first and second rods 130a and 130b extend over the aperture in a direction that is generally parallel to the axis of rotation of the rotor and generally parallel to the direction in which the caliper is able to slide with respect to the carrier. In alternative embodiments where the brake pads are mutually offset in a similar way to Figure 2, the rods may also be offset by a similar degree.

For convenient fitting and removal of the outboard brake pad 111b in a radially outward direction, when confined in other directions by the bridge 105 and rotor 110, the first and second rods 130a and 130b are removably mounted on the caliper 103. As depicted, this is achieved by the rods being mountable in bores 181 provided in lugs or projections 179 on the radially outermost surfaces of the housing 106 and corresponding lugs or projections 180 on the radially outermost surface of the bridge 105. The lugs 179 and 180 are located proximate the aperture 177 and are spaced circumferentially either side of the radial centreline of the caliper (the line defined by the axis of the piston 115).

A robust retention of the outboard brake pad is achieved by the first and second rods 130a and 130b being slideably mounted within the bores for fitting and removal in an axial direction. A suitable fixing mechanism is provided to ensure that the rods do not become loose in service. In this embodiment, fixing is provided by a portion of each rod 130a and 130b being threaded 183 proximate the outboard ends thereof and the bores 178 in the outboard pad 111b have corresponding female threads.

The outboard ends of the rods have an enlarged head 184 that has a suitable interface to receive a tool such as a spanner, wrench or Allen key (as in this case). Thus, the first and second rods 130a and 130b are held in place by the outboard pad 111b being tightened against the bridge 105 via the threaded connection. Additionally, further retention may be provided at the inboard end of each rod 130a and 130b by a fastener such as a split pin 185. In alternative embodiments such a fastener alone may be sufficient, or retention may be provided by one or both of the bores 181 in the lugs 179, 180 having a female threads instead of the outboard brake pad 111b.

The first and second rods 130a and 130b are further arranged to support an inboard brake pad 111a. In this embodiment, the brake carrier 104 provides support for the inboard brake pad 111a in a circumferential direction as conventional (i.e. the majority of the drag force is taken directly by the carrier). However the first and second rods 130a and 130b provide support in radially inward and outward directions. As a result only circumferential brake pad abutments are required on the carrier 104; the radial abutments may be omitted, potentially saving cost.

The inboard pad 111a has sacrificial friction material 113a mounted on to a substantially rigid supporting metal backplate 112a. First and second bores 186 extend through the backplate 112a to receive the first and second rods 130a and 130b and thereby retain the inboard brake pad 111a.

In contrast to the outboard pad 111b, the interface between the bores 186 on the inboard pad 111a and the first and second rods 130a and 130b are required to permit the inboard pad 111a to slide along the rods during brake actuation, and to maintain the running clearance between the rotor 110 and brake pads. As such the interface is not threaded. However, the bores 186 may have some circumferential clearance to the rods to allow for some circumferential movement of the inboard brake pad 111a for effective transfer of the drag loads to the carrier, as well as to avoid carrier and caliper deflections in operation resulting in the inboard pad binding on the rods 130a and 130b. For example, for circular rods, the bores 186 may be oval or pill shaped, whereas if the rods are square in cross-section the bores may be rectangular.

Some wear adjustment mechanisms of heavy vehicle disc brakes of this type require the piston to be prevented from rotation externally of the housing in order to effect wear adjustment. This is known to be achieved by keying the piston to the inboard pad. However, in this embodiment this anti-rotation is achieved using the first and second rods 130a and 130b.

Specifically the piston 115 of this embodiment terminates in an enlarged head usually referred to as a spreader plate 116. For single piston brakes the spreader plate 116 helps to ensure a more even wear of the inboard brake pad 111a by spreading the actuating force over a wider area of the backplate 112a. Further, in embodiments where the piston 115 is not guided by the housing, the first and second rods 130a and 130b may also act as guides for the piston 115.

The spreader plate is provided with bores 187 to receive the first and second rods 130a and 130b and act as the anti-rotation and guiding feature for the piston 115. In this embodiment, where the rods act as guides, the bores 187 are dimensioned to be a relatively close running fit on the rods 130a and 130b. However, if required solely as an anti-rotation feature, the fit may be looser, only one rod may need to interface a corresponding bore 187. Alternatively, the spreader plate 116 may not require a bore, but simply be shaped so that if an excess of rotation may occur, the spreader plate impinges on at least one of the rods and the rotation is blocked.

To assemble the brake pads 111a and 111b to the caliper 103, when the caliper is mounted to a carrier 104 on a heavy vehicle, firstly the wheel (not shown) associated with the disc brake 102 is removed. The first and second rods 130a and 130b are then inserted through the lugs 180, and the outboard brake pad 111b is inserted radially inwardly into the space between the bridge 105 and the rotor 110 and the bores 178 therein are aligned with the rods. The rods 130a and 130b are then pushed through the bores 178. The inboard brake pad 111a is then inserted in a similar way to the outboard brake pad and the first and second rods inserted through the bores 186 therein. Subsequently the first and second rods are inserted through the bores 187 of the spreader plate 116 and then into the bores 181 of the inboard lugs 179.

To secure the first and second rods 130a and 130b in place axially, an Allen key is then used to rotate the rods such that the threaded portion 183 meshes with the female threads of the bores 178 and the outboard pad is held against the bridge 105. Finally, the split pins 185 may be fitted to the inboard ends of the first and second rods 130a and 130b. As well as holding the rods in place axially, the threads provide an effective transfer of the drag load from the outboard pad 111b to the rods 130a, 130b.

Removal of the brake pads 111a, 111b for replacement or inspection is essentially the reverse of fitting.

### Dual brake pads

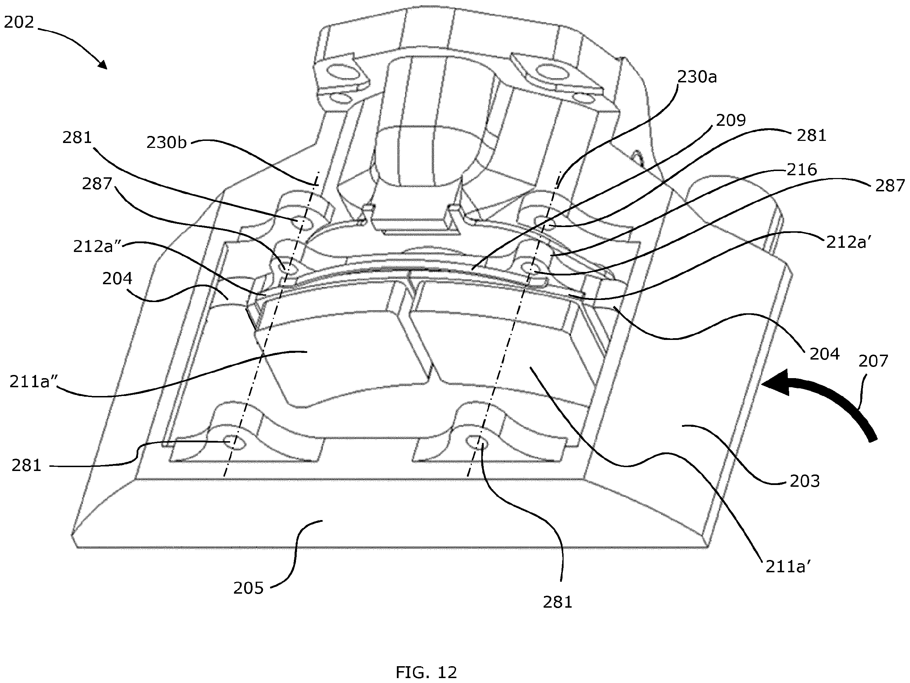

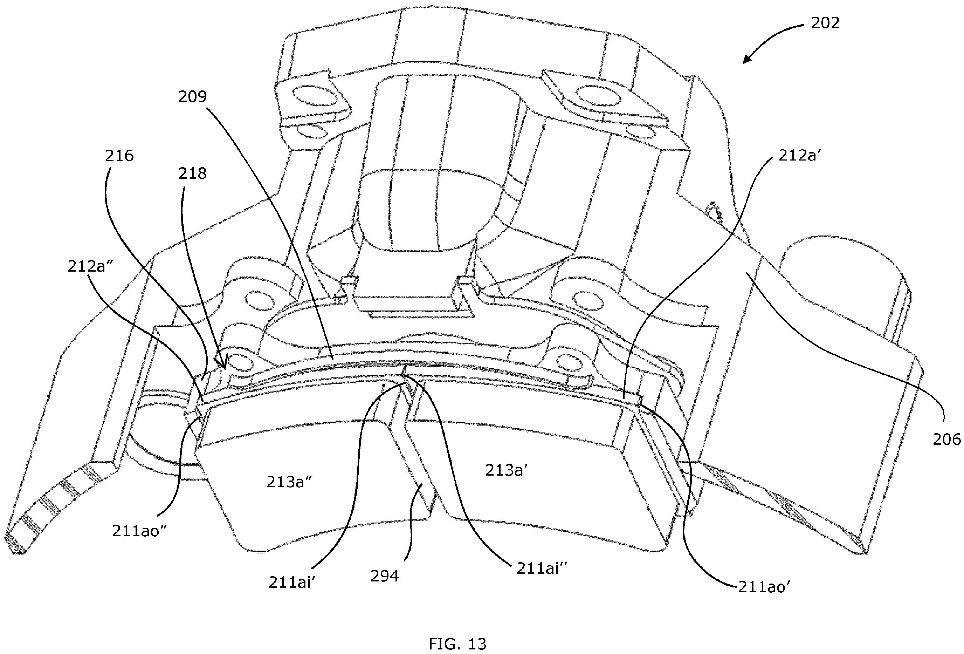

Referring now to Figures 12 and 13, a disc brake according to a second embodiment of the invention is indicated generally at 202 and parts equivalent or similar to those shown in figures 6-11 are labelled with the prefix "2" instead of "1". The disc brake 202 of this embodiment is similar to the first embodiment described above, and in particular is actuated in the manner described above. The outboard pad retention arrangement is unchanged from the first embodiment above.

However, in this embodiment, instead of the single inboard brake pad described above and shown in Figures 6 to 11, first and second separate inboard brake pads 211a', 211a" are provided. The first pad 211a' is on the right (looking at Figure 12), and acts as the leading pad. The second pad 211a" is on the left, and acts as the trailing pad, in relation to the direction 207 a rotor will rotate during the usual (forward) direction of travel of a vehicle (not shown).

The first brake pad 211a' comprises a backplate 212a' and friction material 213a' that is attached to the backplate 212a', as shown in Figure 13. The second pad 211a" comprises a backplate 212a" and friction material 213a" that is attached to the backplate 212a". The backplates 212a' and 212a" are stamped or cast from a suitable metal such as steel to have a suitable strength for support of the friction material.
In this embodiment the first brake pad 211a' and second brake pad 211a" have the same swept area of friction material and are in effect a mirror image of each other. However, in other embodiments, the first and second brake pads are asymmetrical, and have different swept areas of friction material.

Both the first and second brake pads 211a', 211a" are mounted on a shared brake pad support arrangement. In this embodiment, the brake pad support arrangement is a spreader plate 216. As well as locating and supporting the first and second pads 211a', 211a", the spreader plate 216 engages abutment surfaces of a brake carrier 204.

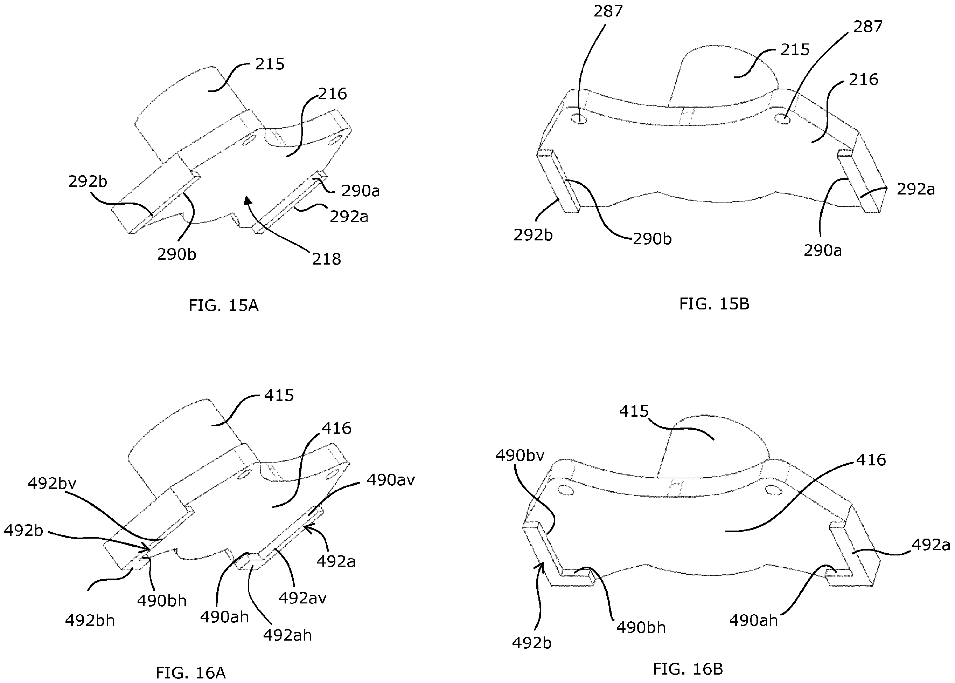

The backplates 212a', 212a" of the first and second brake pads 211a', 211a" are configured to fit adjacent to one another in an opening 218 of the spreader plate 216 (see Figures 15A and 15B, where the spreader plate is shown in isolation). The brake pads 211a', 211a" are held in place by a pad spring 209 extending along the backplates 212a' and 212a". As in the first embodiment, support rods 230a and 230b (indicated by the schematically by broken lines) extend through bores 287 in the spreader plate 216 and bores 281 in the brake caliper 203.

By contrast with the first embodiment, the rods 230a and 230b support the ends of the pad spring 209, and so retain the brake pads 211a', 211a" in place on the spreader plate 216, in conjunction with abutment surfaces of the spreader plate 216 described below. In other embodiments the support rod arrangement is not necessary inboard, and an alternative arrangement is provided to guide the inboard brake pads 211a', 211a" during actuation of the brake.

In an alternative embodiment a strap or straps are used to retain the inboard pads. A central strap in combination with a pad spring can be used, or two straps, one extending over each brake pad. In other embodiments, the pad spring may not be required.

The first brake pad 211a' has a circumferentially outer surface 211ao' and a circumferentially inner surface 211ai'. The second brake pad 211a" has a circumferentially outer surface 211ao" and a circumferentially inner surface 211ai". When the brake pads 211a', 211a" are located in the opening 218 of the spreader plate, the circumferentially inner surfaces 211ai', 211ai" engage one another. The circumferentially outer surfaces 211ao', 211ao" of the first and second brake pads 211a', 211a" engage corresponding vertical abutment surfaces 290a, 290b (see Figures 15A and 15B) of side steps 292a, 292b of the spreader plate 216. In this embodiment, the circumferentially inner and circumferentially outer surfaces 211ai', 211ai", 211ao', 211ao" are surfaces of the backplates 212a', 212a".

As can be seen from Figure 13, when the first and second brake pads 211a', 211a" are located in the opening 218 of the spreader plate 216, the friction material 213a' of the first brake pad 211a' does not contact the friction material 213a" of the second brake pad 211a"; there is a radial channel 294 defined between the friction material 213a' of the first brake pad 211a', and the friction material 213a" of the second brake pad 211a".

When the disc brake 202 is actuated, and the spreader plate 216 is moved towards the rotor by the actuation mechanism, the friction material 213a', 213a" of the first and second brake pads 211a', 211a" contacts the rotor, to retard rotation of the wheel. As the first and second inboard brake pads 211a', 211a" contact the rotor, a drag force acts on the brake pads 211a', 211a" in a circumferential direction. The force transmission path is from the friction material 213a' of the first brake pad 211a' (as it is the leading brake pad), through the circumferentially inner surface 211ai' of the first brake pad 211a' to the circumferentially inner surface 211ai" of the trailing second brake pad 211a", and then through the circumferentially outer surface 211ao" of the second brake pad 211a" and to the vertical abutment surface 290b of the spreader plate 216. Force will also pass directly from the friction material 213a" of the second brake pad 211a" to the outer surface 211ao" of the second brake pad 211a". The spreader plate 216 is configured to transmit substantially the entire braking induced torque load that would otherwise conventionally be transmitted directly from a brake pad to the carrier 204.

As the braking forces are reacted directly by the spreader plate 216, this arrangement allows for thinner backplates (e.g. 5mm or less, or potentially 3mm or less as opposed to 8mm or more as is conventional for heavy vehicles) to be used compared to brake pads of the prior art. This means that less material is needed for manufacture, which has cost and environmental benefits. Further, manufacturing two separate inboard brake pads rather than one large single brake pad may result in further cost savings. It is also easier to maintain the brake pad flatness during processing of the brake pad for smaller separate brake pads compared to a larger single brake pad. Cracking of the friction material due to thermal or mechanical effects is less likely, so that slot features to address cracking may not be required, and complexity of manufacture is reduced. As the brake pads are held by the spreader plate 216 the risk of the thinner backplate forming depressions in the abutment surfaces of the carrier 204 are mitigated. Holding the brake pads in the spreader plate 216 also reduces the risk of ejection of the brake pads via the gap between the carrier and the rotor as the spreader plate is thicker than the backplate of the brake pads, supports the backplates, and itself is supported by the carrier 204.

Having separate brake pads also enables different friction materials to be used on each brake pad. This can help reduce so called 'taper wear', where the leading edge of a conventional brake pad wears quicker than its trailing edge. In this case, the friction material 213a' of the first brake pad 211a' may be made from a more wear resistant material than the friction material 213a" of the second brake pad 211a", resulting in the two brake pads wearing at a more even rate.

The first and second brake pads of other embodiments have alternative differing properties, such as temperature resistance, friction coefficient, squeal resistance and/or compressibility.

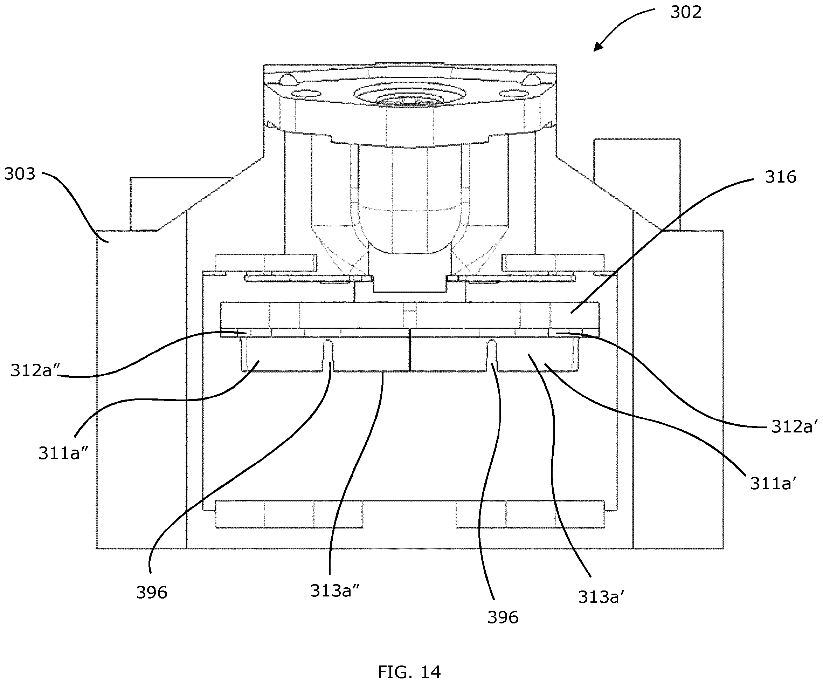

A further embodiment of the invention is shown in Figure 14, where features substantially the same as those of the previous embodiment are given corresponding reference numbers with the prefix "3".

The disc brake 302 shown in Figure 14 has first and second inboard brake pads 311a', 311a" that differ from those of the previous embodiment. The friction material 313a', 313a" of each of the first and second brake pads 311a', 311a" defines a substantially vertically extending slot 396. The slots 396 inhibit cracking of the friction material due to thermal or mechanical effects.

As shown in Figure 14, the friction material 313a', 313a" of the brake pads 311a', 311a" is adjacent, rather than being separated by a channel as in the previous embodiment. The adjacent friction material improves transfer of load from the leading brake pad 311a' to the trailing brake pad 311a".

The disc brake 302 of this embodiment has an outboard brake pad (not shown) similar to that of the first embodiment.

A further embodiment of the spreader plate is shown in Figures 16A and 16B, where features substantially the same as those of the previous embodiment are given corresponding reference numbers with the prefix "4".

Figures 16A and 16B show the spreader plate 416 with an alternative arrangement of side steps 492a, 492b providing abutment surfaces for the inboard brake pads. The side steps 492a, 492b are substantially L-shaped, with a generally vertical portion 492av, 492bv and a generally horizontal portion 492ah, 492bh. The horizontal portions 492ah, 492bh extend circumferentially inwardly towards one another across the spreader plate 416. The side steps 492a, 492b thus provide a brake pad abutment surface having a generally vertical portion 490av, 490bv and a generally horizontal portion 490ah, 490bh. Such an arrangement locates the brake pads in horizontal and vertical directions but still allows fitting in a solely radially inward direction, and may further reduce the risk of pad ejection and carrier abutment pitting issues.

Either spreader plate 216 or 416 can be used with the disc brake 102, 202, 302 of the embodiments shown in Figures 6 to 14. In all illustrated embodiments, the spreader plate 116, 216, 316 is integral to a piston 115, 215, 315. In an alternative embodiment, the spreader plate is separate to the piston. In an alternative embodiment, the brake actuation mechanism has two pistons. The two pistons are integral to the spreader plate. In a further embodiment where the brake actuation mechanism has two pistons, the pistons are separate to the spreader plate.

In an alternative embodiment, no spreader plate is used. In such an embodiment, the brake actuation mechanism has a single or two pistons and the piston or pistons act directly on the backplates of the brake pads. In one alternative embodiment, the brake actuation mechanism has two pistons, and no spreader plate is used. In this embodiment, each piston acts on one of the inboard brake pads. The actuation force is thus evenly split, and taper wear is reduced. In a further alternative embodiment, the backplate of each brake pad has a formation comprising a lug or lugs extending therefrom away from the friction material that fit to a corresponding slot or recess in the spreader plate, instead of, or in addition to the steps 292a and b, 492a and b in order to mount the brake pads to the spreader plate. In certain embodiments this formation may be different for one brake pad than it is for the other so as to act as a poka yoke feature, to ensure that the leading brake pad can only be fitted in a leading position and/or the trailing brake pad can only be fitted in a trailing position.

It will be appreciated that numerous changes may be made within the scope of the present invention. For example, certain aspects of the invention may be applicable to other types of disc brake, such as electromechanically actuated brakes. Further, whilst circular rods have been described, it will be appreciated that other rod profiles such as square, rectangular, oval, pentagonal, hexagonal etc. may be used. The second rod may have a different profile from the first rod. In some embodiments only one rod may be required in conjunction with a further formation to inhibit movement of the brake pad.

Alternative mechanisms may be used for retaining the rods radially and axially relative to the caliper, and/or for retaining one or both of the brake pads relative to the rods. For example, clamping mechanisms or couplers may be used that enable the rods to be lifted in a circumferential or radial direction from the caliper, or the rods may have a non-circular profile and be rotatable to release pads via bores that have a restricted radial opening or for the rods to be releasable from the caliper via a similar mechanism. The rods may be threaded at the opposite end to the head and be threaded into bores in the lugs on the housing or secured via a separate nut inboard.

## Claims

1. A disc brake for a heavy commercial vehicle, the disc brake comprising:
a caliper having an actuation mechanism, a housing for at least partially supporting the actuation mechanism and a bridge extending outboard so as to straddle a rotor and support an outboard brake pad; and
a carrier arranged to slidably mount the caliper;
wherein the caliper further comprises a pad retention structure to mount the outboard brake pad; the retention structure comprising a first rod extending inboard and mounting the outboard brake pad to the caliper such that the drag load generated by the outboard pad in a braking operation is transmitted to the bridge via the first rod.

2. A disc brake of claim 1, wherein the bridge and the housing define an aperture for the fitting and removal of the outboard brake pad in a radial direction and the first rod extends at least partially over the aperture.

3. A disc brake of claim 2, wherein the first rod extends over the aperture from the inboard side to the outboard side.

4. A disc brake of any preceding claim wherein the rod is releasably mounted to the caliper.

5. A disc brake of claim 4 wherein the rod is mounted for fitting and/or removal in an axial direction.

6. A disc brake of claim 4 or claim 5 wherein the releasable mounting comprises a threaded portion of the rod for threaded connection to the outboard brake pad.

7. A disc brake of claim 6 further comprising an outboard brake pad, wherein the outboard brake pad has a threaded bore to receive the threaded rod.

8. A disc brake of any one of claims 4 to 7 wherein the releasable mounting comprises a threaded portion of the rod and the caliper is provided with a complementary threaded bore.

9. A disc brake of any preceding claim wherein the rod is further arranged to support an inboard brake pad in at least a radially outward direction.

10. A disc brake of claim 9 further comprising an inboard brake pad, wherein the inboard brake pad has a bore therethrough arranged to permit movement of the inboard brake pad in a circumferential direction.

11. A disc brake of any preceding claim wherein the first rod is further arranged for contact with a piston of the actuation mechanism so as to restrict rotation thereof.

12. A disc brake of any preceding claim wherein the retention structure further comprises a second rod further arranged to take a portion of the drag load from the outboard brake pad and transmit the drag load to the caliper.

13. An outboard brake pad for fitment to a disc brake according to any preceding claim, wherein the brake pad has a bore therethrough dimensioned so as to transmit a drag load from the brake pad to a rod extending therethrough, in use.

14. An outboard brake pad of claim 13 wherein the bore is threaded to receive a complementary threaded rod, in use.

15. A brake pad arrangement for a disc brake according to claim 9 comprising an outboard pad according claim 13 or claim 14 and an inboard brake pad, the inboard brake pad having a bore therein, the bore permitting circumferential movement of the inboard pad with respect to a rod, in use.
